(19) Europäisches Patentamt
European Patent Office
Office européen des brevets

(11) Publication number: 0 245 658
A2

# (12) EUROPEAN PATENT APPLICATION

(21) Application number: 87105326.0

(51) Int. Cl.4: C08G 77/06

(22) Date of filing: 10.04.87

(30) Priority: 11.04.86 US 850678

(43) Date of publication of application:
19.11.87 Bulletin 87/47

(84) Designated Contracting States:
AT BE CH DE FR GB IT LI LU NL SE

(71) Applicant: UNION CARBIDE CORPORATION
39 Old Ridgebury Road
Danbury Connecticut 06817(US)

(72) Inventor: Reedy, James Dale
154 Rauch Drive
Marietta Ohio 45750(US)
Inventor: Crane, William Clyde
P.O. Box 192
Friendly West Virginia 26146(US)

(74) Representative: Wuesthoff, Franz, Dr.-Ing. et al
Patentanwälte Wuesthoff -v.
Pechmann-Behrens-Goetz Schweigerstrasse
2
D-8000 München 90(DE)

## (54) Process for manufacture of aqueous emulsions of silicone oils and resins.

(57) This invention relates to a process for manufacturing a more stable and less shear sensitive aqueous emulsion of high molecular weight silicone oils and resins. Direct emulsification of high molecular weight silicone oil or resin is avoided by using a select group of reactive low molecular weight silicones, which may also contain silanes, and which reactants are polymerized in the emulsion with an appropriate surface active catalyst in a separate storage vessel, after rapid formation of a grease and dilution to the emulsion have been completed and after the emulsion has been transferred to the storage vessel. The rapid formation of the grease precursor and dilution to an emulsion and the removal of the resulting emulsion to a separate vessel for condensation polymerization allows this process to be practiced as a batch, continuous or semicontinuous process. The use of a condensation polymerization process also results in the elimination of unwanted cyclic by-products in the polymer of the oil or resin emulsion.

EP 0 245 658 A2

Xerox Copy Centre

# PROCESS FOR MANUFACTURE OF AQUEOUS EMULSIONS OF SILICONE OILS AND RESINS

## BACKGROUND OF THE INVENTION

### Field of the Invention

This invention relates to a condensation process for making silicone oils and resins in an emulsion. More particularly, the invention relates to a process for rapidly forming an emulsion from reactive intermediates having a variety of functional units, transferring the emulsion to a separate storage vessel, and polymerizing high viscosity oils and resins in said emulsion.

### Prior Art

Although it is very difficult to emulsify high molecular weight silicone polymers in a stable emulsion, several such processes do exist in the art.

U.S.-A - 2,891,920, U.S. - A - 3,706,695 and U.S. - A - 4,228,054, for example, are all typical of state-of-the-art emulsion polymerization, i.e., emulsion equilibration, processes. Using this emulsion polymerization technology, low molecular weight cyclic siloxanes are simultaneously polymerized and emulsified. The particle size of these emulsions is very small and their stabilities are superior to conventional silicone emulsions prepared from preformed polymers of equivalent weight, emulsifiers and water. This technology allows high molecular weight silicones to be prepared from cyclic dimethylsilicones such as

$$[(CH_3)_2SiO]_4 \text{ or } [(CH_3)_2SiO]_5$$

and certain low molecular weight co-reactants.

One of the major deficiencies of this emulsion polymerization technology is that it results in an equilibrium concentration of low molecular weight cyclic siloxanes in the silicone polymer as a by-product of the polymerization process. For example, when dimethylsilicones are used as a starting reactant --except when very low molecular weight polymers are the desired products --the reaction produces about 12% cyclic species by-product in the polymer at equilibrium. These cyclic species are undesirable because they can leach from the silicone polymer in the end use application, i.e., when the silicone is used as a coating or sealant. The polymers have sufficient vapor pressure to permit the release of these cyclics to the atmosphere over a period of time. Moreover, the cyclics cannot be removed, even by steam distillation, without destroying the emulsion.

Another disadvantages of this technology is that, because the amount of silanol endblocking depends on the temperature, i.e., the higher the temperature the greater the amount of residual silanol produced, the viscosity of the polymer is uncontrolled any may vary over a broad range. For example, it might be desirable to control the silanol concentration in certain applications, e.g., standard dimethylsilicone oils generally have about 200 ppm silanol content, and such controls cannot be easily obtained using the process parameters of the emulsion polymerization technology.

A further problem with this technology is that it does not work with oils and resins, e.g., silanol terminated dimethylsilicones. This is believed to be true because the high molecular weight polymers, unlike the low molecular weight cyclics, are incapable of forming water soluble intermediates preferred in emulsion polymerization.

U.S. Patent No. 4,476,282 to Koerner et al. teaches a variation on the emulsion polymerization technology which does work on these higher molecular weight oils and resins. More specifically, the Koerner et al.patent teaches that an emulsion may be produced by preparing a conventional grease from silanol terminated dimethylsilicones and other co-reactants, holding them at sufficiently high temperatures in the presence of a surfactant, which acts as a catalyst, until the silanols condense and the co-reactants are incorporated, and then cooling and diluting to the final emulsion.

Polymerization of the starting reactants of this patent, however, occurs before the final emulsion is formed. That is, a complete chemical reaction occurs in the reactor vessel resulting in a high viscosity composition prior to emulsification of the polymer. As a result, the shortest reaction time described in any example for producing this paste is two hours, i.e., the time for polymerization to occur. Because of the relatively long reaction times needed before polymerization is completed, the invention of the Koerner et al. patent is not amenable to a continuous process where short residence times in the order of minutes or seconds, not hours, are needed. The viscous nature of the "paste" also makes both dilution of the grease to a final emulsion and transfer of the resulting emulsion out of the reactor vessel difficult.

Further, U.S.-A - 4,476,282 discloses that cyclic dimethylsilicones can be used in that technology (column 5, line 13). The use of such cyclics is inconsistent with the condensation polymerization of the present invention in which the mild conditions used are insufficient to open the cyclic rings so that the siloxane bonds of these cyclics may polymerize into high molecular weight silicones. Moreover, the disadvantages associated with the cyclic by-products produced in emulsion polymerization technology may not be avoided by the Koerner et al. reference.

The Journal of Polymer Science 20 3351 (1982), describes a process for the condensation polymerization of oligomeric polydimethylsiloxanols in aqueous emulsions using a surface active sulfonic acid catalyst and cooling the reactant to condense. This reference fails to teach a rapid grease formation and dilution to an emulsion step. The reference further fails to teach the diversity of reactive intermediates which may be used in the condensation polymerization process.

Thus, there is a need in the art for a continuous or semicontinuous condensation polymerization process utilizing linear oligomers or monomers which can be rapidly formed into a grease and diluted into an emulsion prior to being polymerized into high molecular weight silicones in an emulsion; and which process does not produce a large concentration of undesirable cyclic by-products in the polymer of the resulting emulsion.

## Objectives

It is thus an object of this invention to provide a process which may be used as a continuous or semicontinuous process in the manufacture of aqueous emulsions of silicone oils and resins.

It is a further object of this invention to provide such a process for making high molecular weight silicones from linear oligomers or monomers which can be converted into such silicones.

Yet another object of the invention is to provide a variety of such linear starting reactants which can be rapidly formed and diluted into an emulsion prior to condensation polymerization into high molecular weight silicones in a final emulsion.

Another object of the invention is to provide such a process which does not produce a large quantity of undesirable cyclic by-products in the silicone polymer

A still further object of the invention is to provide such a process in which the reactants in the reactor vessel have short residence times.

## BRIEF SUMMARY OF THE INVENTION

In satisfaction of the foregoing objects, this invention relates to a condensation process for making high molecular weight silicone oils in an emulsion which process may be run in comparatively short process time periods which are conducive to a continuous or semicontinuous process. This process comprises using linear oligomers or monomers as starting reactants to form a grease in a rapid nonchemical reaction, rapidly diluting the grease to an emulsion, transferring the resulting emulsion to a separate storage vessel and allowing the reactive intermediates, i.e., starting reactants, to polymerize in the storage vessel to form a high molecular weight polymer oil or resin in an emulsion. The starting reactants, i.e., linear oligomers or monomers, are mixed in the order, concentrations, temperatures and pressures indicated herein prior to being diluted to an emulsion. As noted, once the grease is rapidly formed and diluted to an emulsion, the emulsion is transferred to a separate storage vessel where the condensation occurs; thus the reactor vessel is free for further reactions. The above process also results in a substantial reduction in the amount of undesirable cyclics produced in the final silicone polymer.

As noted, it is not only the proper selection of starting reactants, but also the proper order of their combination, the proper weight percentage amounts of reactant which should be used and the proper temperature and pressure parameters which help define the present invention.

More particularly, the process of the invention comprises the steps of:

1. forming a grease comprising silicone reactants, water and a surfactant or surfactants, which may or may not, additionally function as a polymerization catalyst, wherein the water content of the grease is no more than 30 percent by weight of the silicone phase, the total surfactant, i.e., ionic and non-ionic surfactant, is no more than 18 percent by weight of this grease mixture, the silicone reactants are the remaining percentage by weight of the total mixture, and the lifetime of the grease is less than 60 minutes.

2. Diluting the grease formed from the water, silicone reactants and the surfactant or surfactants with additional water such that the resulting emulsion contains greater than 35 percent water.

3. Adding in either the grease forming or in the diluting step, the acid form of an anionic surfactant or the base form of a cationic surfactant to form surface active condensation catalysts such that the amount of this surface active catalyst does not exceed 8 percent by weight of the silicone polymer formed.

4. Transferring the emulsion formed in the dilution step from a reactor vessel into a storage vessel where polymerizaiton of reactants occurs and the final high molecular weight oil or resin emulsions are formed.

5. Neutralizing the catalyst of step 3 with an appropriate acid or base.

In an alternative embodiment, precursors of the catalytic surfactant of step 3 may be added so that the catalysts involved in the polymerization may be formed in situ.

The process described above facilitates the formation of a stable and less shear sensitive emulsion of high molecular weight silicone polymers.

## DETAILED DESCRIPTION OF THE INVENTION

The present invention provides a process for manufacturing an aqueous emulsion of silicone oils and resins which process may be practiced as a bath, continuous or semicontinuous process and which process significantly reduces the amount of undesirable cyclic by-product in the polymer formed.

According to this emulsion condensation technology, starting reactants with functional groups having reactivities considerably greater than that of siloxane bonds of the $Me_2SiO$ polysiloxane units in the same reactant should be employed. This permits the selection of reaction conditions such as: time, temperature, and catalyst activity, which can facilitate the selective chemistry of the reactive functional groups on these reactants, yet avoids the redistribution chemistry of the dimethylsiloxane block segment. In other words, the time, temperature, etc. parameters are selected in such a way that the functional groups on the starting reactants will be affected by the reaction conditions, i.e., it is these functional groups which will react to form the polymer, but that the polysiloxane groups remain unreacted under the same reaction conditions. While not wishing to be bound by theory, it is believed that, because these polysiloxane groups do remains unreacted under the reaction conditions, the entire polysiloxane block segment of the starting reactant remains intact during the polymerization; as a result, the problem of having cyclic by-products is avoided. Indeed, because the siloxane groups are unreacted under the reaction conditions of the invention, cyclic dimethylsilicones cannot be used as starting reactants in this process. Thus, by using starting reactants having little or no concentration of cyclics, it is possible to make high molecular weight polymers in the final emulsion and still avoid having a concentration of these cyclics which would be detrimental to the emulsion product.

At least one of the silicone reactants used in the present invention to form the "grease" of the silicone phase in step one of the overall process must be capable of undergoing a silanol or co-silanol condensation. Thus, the co-reactants in most cases are substances capable of forming silanol groups upon contact with water. Alkoxy, acryloxy, halogen, etc. are suitable silanol precursors. In addition to silanol groups, $Me_3SiOSiMe_3$ and the siloxane bond of (HMeSiO) units are also sufficiently reactive, when an acid catalyst is used, to permit the incorporation of these functional units into the siloxane polymer during the condensation.

### Silicone Reactants

More particularly, the various silicone starting reactants used to form the resulting silicone polymer may be chosen from the following classes:

Class I: Silanol terminated dimethylsilicone or precursors of the dimethylsilicone which form silanol when mixed with water and surfactant.

Class I reactants are used in the incorporation of $(Me_2SiO)_n$ block segments into the final polymer defined in formula I below. These Class I reactants should have a viscosity greater than 25 $mm^2/s$ (cst) but less than 5,000. Further the total amount of Class I reactants should contain no more than 6 weight percent $(Me_2SiO)_x$ where x is equal to 4, 5 or 6 cyclic species and should contain no more than 2.5 weight percent of $(Me_2SiO)_4$ in particular. The silanol terminated dimethylsilicone or precursor should also represent more than 50 weight percent of the combined silicone reactants from all classes of starting reactants. Class I reactants may also be used in the incorporation of the $Y_{m+2}$ segment of the final polymer defined below when Y is equal to $HO_{1/2}$ or when Y is an alkoxy group.

The exact amount of silanol or its precursor which should be used will vary with which segment the silanol or precursor is being used to incorporate and the exact weight percent of the total polymer which that incorporated segment represents.

Class II: $Me_3SiX$ where X equals alkoxy, acryloxy, aryloxy, halogen or other precursor capable of hydrolyzing to form the equivalent of $Me_3SiOH$. X may also be trimethylsiloxy, but only when the surface active catalyst used to promote polymerization is an acid.

Alternatively, an oligomer or polymer having a nominal $Me_3SiO(Me_2SiO)_pH$ structure where p equals 1 to 100 or a precursor hydolyzing to form at least one silanol group or $Me_3SiO(HMeSiO)_qSiMe_3$ where q equals 1 to 50 may be used.

Reactants from Class II are used in the incorporation of the $Y_{m+2}$segment into the final polymer defined below when Y is equal to $Me_3SiO_{1/2}$. The exact amount of Class II reactant used is selected according to how much will be incorporated into the final silicone polymer, i.e., ≦ 15 wt. percent of the total polymer, and can be readily ascertained by one skilled in the art.

Class III: $(RO)_3SiC_rH_{2r}M$

Where r equals 1 to 18 and the carbon chains may be straight or branched and where M equals hydrogen, amino, including polyamines such as ethylene diamine; amide, polyamide, ester or polyester, ether or polyether, acrylate or polyacrylate, methylacrylate or polymethacrylate, alkenyl, mercapato, disulfide, halogen, fluorocarbon, quaternary ammonium salt, acetal, or azide such as azidosulfonyl:
When r equals o, M may also equal vinyl or aryl;
R = hydrogen, alkyl having 1 to 20 carbons, alkenyl, ether, or polyether;
Alternatively "OR" may be replaced with halogen when the surface active catalyst is an acid.

In a preferred embodiment of Class III reactant, the compound is $R'Si(OR)_3$, where R is an aminoalkyl having total 2 to 20 carbons and 1 to 8 nitrogens.

Class III reactants are used in the incorporation of the $R^4SiO_{3/2}$ segment into the final polymer defined below. Additionally, like Class I reactants, Class III reactants may be used in the incorporation of the $Y_{m+2}$ segment into the final polymer where Y is equal to $HO_{1/2}$ or where Y is an alkoxy group. Once more, the exact amount used varies according to how much is incorporated into the polymer, i.e., less than 10 percent of the silicon polymer, and which compound is actually selected, e.g., if RO equals methoxy rather than ethoxy. This amount is readily ascertained by one skilled in the art.

In one embodiment of this invention, the $R^4SiO_{3/2}$ precursor is added after the catalyst neutralization and ultimately becomes bound to the rest of the polymer when water is removed from the emulsion in the end use application.

Class IV: $MeR''Si(OR)_2$ or $RO(MeR''SiO)_jR$ having 1 to 20 carbons, alkenyl, ether or polyether, R″ is $C_rH_{2r}M$, r and M as defined in Class III and j equals 2 to 50.

Class IV reactants are used in the incorporation of the $(MeR^4SiO)_z$ segment into the final polymer defined below. The exact amount used is determined as discussed for the other reactants.

Class V: MeHSiO cyclics or linears or $MeHSiX_2$ where X is halogen.

Class V compounds are used when $(MeHSiO)_z$is desired as a component of the final polymer, i.e., when R″ is equal to hydrogen in the formula defined below. As discussed herein, the surface active catalyst must be acid when Class V starting reactants are used. Like Class I and Class III reactants, Class IV and Class V reactants may also be used in the incorporation of $Y_{m+2}$ into the final polymer formula below when Y is equal to $HO_{1/2}$ or when Y is an alkoxy group. The amount used is determined as discussed for other reactants.

In another aspect of this invention, the polymer formed can be end blocked by the $Me_3SiOSiMe_3$ starting reactant since it is sufficiently more reactive than $Me_2SiO$ units in the presence of water when a surface active acid catalyst is used.

Silicone Phase Polymer

The silicone phase polymer formed by the above silicone reactants is composed as follows: $Y_{m+2}(Me_2SiO)_n(R^4SiO_{3/2})_m(R^4MeSiO)_z$ (I)
where $R^4$ = H, alkyl, alkenyl, aryl, substituted aryl, or substituted alkyl: halocarbon, amino, mercapato, ether, ester, acid, acrylate; methacryiate, epoxy, amide, hydroxyl, acetal, cyano, or azide such as azidosulfonyl;
Y is individually a monofunctional radical selected from the group consisting of:
$Me_3SiO_{1/2}$.$O_{1/2}H$, $O_{1/2}R^3$,
where $R^3$ is an alkyl group having 1 to 6 carbons, an alkaryl group having 7 to 20 carbons or an aryl group having 6 to 19 carbons;
m + 2 is in a range of 0 to 50 such that Y is less than or equal to 15 weight percent of the polymer;
n has a value of at least 20 such that ($Me_2SiO$) is greater than or equal to 50 weight percent of the polymer;
m is in a range of 0 to 50 such that $R^4SiO_{3/2}$ is less than or equal to 10 weight percent of the polymer; and
z is in a range of 0 to 50 such that $R^4MeSiO$ is less than or equal to 45 weight percent of the polymer.

The polymer I contains no more than 2.5 wt % $(Me_2SiO)_4$ impurity and no more than 5% of $C_xH_{2x+1}OH$ where x = 1-5.

Other Reaction Components and Variables

In forming the silicone polymer of this process, the water content before dilution of the total reaction mixture is 1 to 29 percent of the silicone phase, preferably 3 to 20 percent. The viscosity of ($Me_2SiO$) silanol starting reactants or their precursors from class I range from 25-5,000 $mm^2/s$ (cst) with a preferred range of 30-200 $mm^2/s$ (cst).

The duration of the grease forming step, the temperature to which the reactants in the step should be heated and the amount of both ionic catalyst and non-ionic surfactant used in the step are all directly interrelated. Broadly, the duration of the grease formation step may last from seconds to 60 minutes with a preferred range of 0.01 seconds to 20 minutes, more preferably 0.01 seconds to 5 minutes, and most preferably less than 1 minute.

Temperature may have two principal effects on the duration of this grease formation step. First, if the temperature is raised too high, the high molecular weight silicone polymer may form prior to emulsification. This polymer formation would make emulsification under the present parameters difficult. Second, a high temperature may cause siloxane bonds to break leading to the formation of cyclics which are otherwise avoided by the present invention.

Consequently, preferred temperatures for the grease formation step are in the range of 25°C-60°C However, the temperature can approach or exceed 100°C if short duration times are used and if non-ionic surfactant is added at this stage. While not wishing to be bound by theory, it is believed the non-ionic emulsifier competes with the ionic polymerization catalyst for the interfacial area and thus slows the rate of polymerization. Thus, given short grease formation times and sufficient quantity of non-ionic surfactant, the temperatures at the grease forming stage can be quite high. If ionic catalyst is not added during the grease formation step at all, temperature becomes even less of a concern since no polymerization is promoted.

Table I below shows preferred temperatures and their corresponding grease stage duration where no non-ionic emulsifier is used, i.e., where there is no competition from non-ionic reactant and the grease formation step would be expected to proceed more quickly.

TABLE I

| Temperature Range of Grease | Preferred Duration of Grease Stage** |
|---|---|
| 80°C* | <1 min |
| 60-79°* | <3 min |
| 40-59°* | <5 min |
| <40° | <5 min |

* With subsequent dilution with cold water
** When catalyst is present

As can be seen from this table, this technology allows for a rapid batch emulsification, continuous or semicontinuous emulsification process; the higher the temperature, the shorter the duration of the grease stage should be, particularly since no non-ionic emulsifier is present. It is these mild conditions of the process which assure that only the highly reactive functional groups of the starting reactants and not the polysiloxane bonds of these same reactants will react.

In the preferred embodiment of this technology, the starting silicone reactants from all combined classes have a viscosity less than 500 centistokes; and the grease is formed in less than 20 seconds at 25-60°C and has a viscosity of greater then 100,000 $mm^2/s$ (cst). This grease is then diluted at 10-60°C to an emulsion having more than 35 percent water and a viscosity less than 5000$mm^2/s$ (cst) in a combined total time of less than 30 seconds.

It is important to realize that the bulk of the condensation and neutralization chemistry occur in the emulsion storage vessel. This is a significant aspect of the invention because it is this aspect which allows for a continuous or semicontinuous process. The rapidly formed grease which is in turn rapidly diluted to an emulsion can be removed from the reactor vessel after seconds and placed in a storage vessel where condensation polymerizaton in the emulsion then takes place. Accordingly, the reactor vessel is free to continue the process. It is an even further feature of this invention that this emulsion, where no polymerization has yet occurred, can be easily transferred from the reactor to the storage vessel.

In the dilution step in which the emulsion is formed following the grease formation step of the process, the water range is from 35-95% and in a preferred range of 40-90%. The temperature of this emulsification step is from 10-60°C, preferably 20-50°C.

The rapid formation of the grease and dilution to an emulsion takes place at low pressures of less than 6,9 bar (100 psig).

Low pressure emulsification is possible because the high viscosity of the grease precursor allows that only low shear be needed to break up the emulsion particles.

The surface active catalyst, i.e., the ionic surface active agent, which promotes the condensation of the silanol polymer or its precursor in the storage vessel may be added either during the formation of the grease or it may be added during the dilution step. It should be noted that if the silanol concentration of reactants, i.e., the combined initial concentration plus that formed by hydrolysis, is greater than 2 percent by weight of the mixture, then the ionic catalyst should be added during or immediately after dilution to the emulsion and, if it is less than 2 percent, it is preferred to add it prior to dilution to the emulsion, i.e., during the grease formation stage. Otherwise, preferred addition of the ionic catalyst is at the grease formation step unless the time/temperature conditions cause excess cyclics to be formed. In that case, it is preferable to add the catalyst during the dilution step so that unwanted polymerization during the grease formation step does not occur.

Non-ionic surface active agents are also usually added during grease formation. In cases where the emulsion condensation is slow, it may be desirable to add this agent after the final neutralization. It is always necessary to have either the ionic surface active catalyst or non-ionic surface active agent present as an emulsifier to be able to prepare the grease in the reactor. It is preferred to have both ionic and non-ionic surfactant present during the grease formation step.

The ionic surface active catalyst which acts as the condensation promoter is either the acid form of an anionic surface active agent or the base form of a cationic surface active agent.

Ionic surface active catalysts which may be used with the invention include acid catalysts such as alkyl sulfonates and halogenated carboxylic acids, i.e., fluorinated carboxylic acids, and base catalysts such as tetraalkylammonium hydroxide.

The preferred ionic surface active catalyst, however, are:

$$\text{Acid:} \quad R^5ArSO_3H \text{ or } (R^6O)_2\overset{O}{\overset{\|}{P}} - OH$$

Ar = Aryl $R^5$ = $R^6$ = an alkyl, aryl or alkalryl group having 6 to 22 carbon atoms

$$\text{Base:} \quad R_4N^+OH^- \text{ or } R_3N^+CH_2-\overset{O^-}{\overset{/}{C}}H-R^7$$

$R^7$ = H, alkyl or aryl where at least one R group contains 6 to 18 carbons.

Alternately precursors leading to the same types of catalyst may be employed.

For example, a precursor to the acid catalyst could be $R^8ArSO_3R^9$, where $R^9$ is an alkyl group having 1 to 18 carbons and $R^8$ is defined as $R^5$ above or can additionally be a siloxy group.

Base precursors including the following may also be used:

$R_4^+Cl^-$ + NaOH → $R_4N^+OH^-$ + NaCl

OR

$R_3N$ + 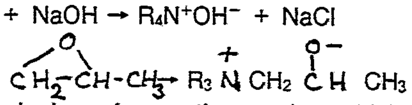

Non-ionic surface active catalyst which may be used with the invention include ethoxylated alkylphenols or ethoxylated linear alcohols

When certain starting reactants are used in the grease formation step of the invention, the ionic catalyst must be either base or acid. That is, if the starting reactant contains a functional group which neutralizes the acid or base catalyst or is destroyed by the catalyst, then, naturally, the so affected catalyst is unsuitable. For example, when $(MeHSiO)_x$ is used as a starting reactant, an acid catalyst is needed. Similarly, $Me_3SiOSiMe_3$ cannot be used in this technology with a base catalyst.

If the ionic surface active catalyst is added at the grease formation step, the concentration is 1 to 8 percent of the total silicone/silane reactants and a preferred range of 1 to 6 percent. The amount of ionic surface active catalyst should not exceed 8% of the silicone phase. The concentration of non-ionic surface active agent plus ionic surface active catalyst is 1 to 18 percent, preferably 2 to 16 percent. Accordingly, the amount of non-ionic surfactant may vary from 0 to 17 percent.

The final step of the process comprises neutralizing the catalyst of the prior steps with an appropriate acid or base. Such neutralization takes place in the storage vessel to which the emulsion was transferred prior to polymerization. Acid catalysts can be neutralized with weak bases such as amines, ethanol amines or sodium carbonate. Base catalysts can be neutralized with weak acids such as acetic acid.

The high molecular weight oil or resin emulsion created by the process of this invention can be used for textile treatment, coatings and the like.

EXAMPLES

The following specific examples and procedures are presented to illustrate the invention

Definitions

$D_4$-$D_6$ $[(CH_3)_2SiO]4$-6

gc gas chromotography

cps cycles per second

surfactant 1 an ethoxylated lauryl alcohol sold under the tradename Brij®30 by ICI Americas Corporation

surfactant 2 an ethoxylated lauryl alcohol sold under the tradename Brij®35 by ICI Americas Corporation

surfactant 3 a non-ionic surfactant sold under the tradename Tergitol®NP-10 by Union Carbide

surfactant 4 a cationic surfactant sold under the tradename Arquad®T-50 by AKZO Chemie America

EXAMPLE 1.

Silanol Endblocked Dimethylsilicone

To a Hobart Bowl was charged 34.88 grams of water, 34.96 grams of 50/50 blend of surfactant 1 and surfactant 2, and 19.97 grams of dodecylbenzene sulfonic acid. This was agitated slowly at ambient temperature until a smooth consistency was achieved. To this "soap solution" was added with moderate agitation 352.46 grams of a 100 $mm^2/s$ silanol endblocked dimethylsilicone fluid over a 10 minute period. The resulting grease was then diluted with 542.28 grams of water. The formation of the grease which required critical ratios of silicone/water/ emulsifier does not imply any chemical transformation of the silicone to high polymer. Chemical transformation takes place in the storage vessel, not in the reactor vessel.

Condensation of Silanol

949 grams of the above emulsion were allowed to react at ambient temperature for 44 hours in a 1000 ml flask with slow agitation. It was then separated into 2 portions to characterize the emulsion and the contained silicone oil.

The emulsion after neutralization with triethanol amine had 0.394% $D_4$, traces of $D_5$ and 0.185% $D_6$. It's pH was 7.6, viscosity 16.4 mPa • s (cps). It passed a standard 2 day 50° stability test and two freeze-thaw cycles. It contained 40.8% non-volatile components.

The second portion of the emulsion was neutralized with sodium carbonate and the emulsion separated into 2 phases by the addition of 3 parts of isopropanol. The silicone oil layer was stripped to remove alcohol. The resulting polymer had a viscosity of 241,000 cstks. A silanol analysis by a gc method (Grignard) showed 312 ppm (OH) silanol.

EXAMPLE 2.

Trimethylsiloxy Endblocked Dimethylsilicone

The experimental procedure was the same as in Example 1 except that 0.21 grams of hexamethyldisiloxane was used in addition to 351.93 grams of 100 $mm^2/s$ fluid. After 44 hours the emulsion was separated into 2 portions. The major portion was neutralized with triethanolamine. The % cyclics $D_4$ -$D_6$ were 0.6%. The pH was 7.5, viscosity 20.4. It passed a 2 day 50° stability test and 2 freeze-thaw cycles. The non-volatiles were 42.1%.

The second portion of emulsion was neutralized with sodium carbonate. The emulsion was broken by the addition of isopropanol and the silicone portion stripped free of alcohol. It's viscosity was 100,200 $mm^2/s$. The silanol content was 320 ppm by gc (Grignard Method).

EXAMPLE 3.

Affecting a Reaction Between $Me_3SiOSiMe_3$ and HD $_n$OH in an Emulsion Rather than in the Grease Stage

The experimental procedure was similar to that of Example 2 except that the alkylbenzene sulfonic acid was added after the grease had been diluted to an emulsion.

The grease was composed of 69.96 grams of a 50/50 blend of surfanctant 1 and surfactant 2, 69.81 grams of water 691.97 grams of 100 $mm^2/s$ silanol endblocked dimethylsilicone 8.65 grams of hexamethyldisiloxane.

The grease was diluted to an emulsion by adding 1083.6 grams of water followed by 41.01 grams of dodecylbenzene sulfonic acid. After reacting 23 hours at 25° the emulsion was neutralized with triethanolamine. The silanol level had fallen to 0.054% and the emulsion contained 0.228% $D_4$ and 0.407% $D_4$ -$D_6$.

EXAMPLE 4.

Emulsion Condensation with Alkylbenzene Sulfonic Acid Without Additional Surfactants

To a Hobart Bowl was charged 14 grams of dodecylbenzene sulfonic acid and 14 grams of water. The two were stirred until a uniform soap was produced. Over a 5 minute period 345.7 grams of a linear silanol endblocked fluid of 100 $mm^2/s$ and 4.3 grams of hexamethyldisiloxane were stirred with the soap to make a grease. To this was added 614 grams of water to make an emulsion over an additional 5 minute period. 934 grams of emulsion were transferred to a 3-necked flask. Samples were taken and neutralized with sodium carbonate in 1, 2, 4 hours. The neutralized emulsion samples were broken by adding 3 parts of isopropanol to one part of emulsion. The silicone phases had the following compositions:

| Time h | $Me_3SiOSiMe_3$ | $D_4$ | $D_5$ | $D_6$ | Silanol ppm | Stripped Viscosity $mm^2/s$ |
|---|---|---|---|---|---|---|
| 1 | Trace | 0.079 | Tr | 0.08 | 1290 | 307 |
| 2 | Non-detectable | 0.093 | Tr | Tr | 704 | 440 |
| 4 | Non-detectable | 0.164 | Tr | 0.125 | 203 | 598 |

EXAMPLE 5.

Emulsion Condensation of Silanols and Selective Siloxane Bond Clevages

To a Hobart Bowl were added 35.0 grams of water and 34.96 grams of a 50/50 blend of surfactant 1 and surfactant 2. These ingredients had been preheated to 40°C. The "soap" was stirred until it had a uniform consistency. To this was added 342.3 grams of approximately 100 $mm^2/s$ silanol endblocked dimethylsilicone, 3.49 grams of $MeSi(OEt)_3$ and 3.49 grams of $Me_3SiOSiHMeOSiMe_3$. The mixture was agitated for 8 minutes to make a grease, then diluted with 547.6 grams of water to make an emulsion. A portion of this emulsion, 705 grams, was added to a 100 ml flask equipped with a stirrer. To this was added 14.59 grams of dodecylbenzene sulfonic acid at room temperature. The reaction emulsion was gently stirred for 19 hours. At this point a 92 gram sample was removed and neutralized with sodium carbonate. The emulsion contained 0.15% $D_4$, 0.04% $D_5$ and 0.065% $D_6$ and contained no measurable amounts of $Me_3SiOSiHMeOSiMe_3$ or $MeSi(OEt)_3$. A portion of this neutralized emulsion was treated with isopropanol to break the emulsion. The silicone phase was stripped to remove the alcohol. It had a viscosity of 1048 $mm^2/s$ and0.091% silanol.

The remainder of the original emulsion was neutralized after 66 hours with triethanolamine. The emulsion contained 0.348% $D_4$ and 0.446% $D_4$ -$D_6$. It had a pH of 7.2, contained 40.9% non-volatiles and had a viscosity of 153 mPa • s (cps). The emulsion passed a 2 day 50° heat stability test and passed two freeze-thaw cycles.

A portion of the emulsion was broken by adding alcohol, and the oil phase was stripped of alcohol then characterized. Viscosity 2251 $mm^2/s$ silanol 356 ppm.

EXAMPLE 6.

Emulsion Condensation Using a Cationic Surfactant Catalyst

To a Hobart Bowl was added 50 grams of water, 40 grams of surfactant 3, 75 grams of surfactant 4. The combination was heated to 48° and stirred until a uniform "soap" was produced. At this point the heat was turned off and 347.5 grams of a silanol endblocked fluid of 100 cstks and 3.0 grams of $\gamma$-aminopropyltriethoxysilane were added and stirred with shearing to make a stiff grease. An additional 446.6 grams of water were added to transform the grease into an emulsion. A 907.6 gram sample of this emulsion was transferred to a 3-necked flask. The contents were heated to 30°C and 1.88 grams of sodium hydroxide added with mixing to convert the quaternary surfactant 4 salt to active catalyst. After 1 hour the

surfactant 4 hydroxide was neutralized with 10 grams of 6N acetic acid. Additional additives introduced at this point were 1.88 grams of sodium benzoate and 23.6 grams of ethylene glycol. The emulsion had a pH of 6.4, viscosity of 93mPa. s(cps), passed a 2 day 50° stability test, passed a standard freeze thaw test. The emulsion contained: 43.1% solids, 0.71% $D_4$, a trace of $D_5$, 0.07% $D_6$ and no remaining γ-aminopropyltriethoxysilane.

EXAMPLE 7.

Emulsion Condensation Employing a Silanol Fluid Hexamethyldisiloxane and Ethyltriacetoxysilane

To a Hobart Bowl was added 20 grams of dodecylbenzene sulfonic acid, 35 grams of a 50/50 blend of surfactant 1 and surfactant 2 and 35 grams of water. The combination was stirred until a uniform soap was produced. Over a 7 minute period a mixture of 343 grams silanol endblocked dimethylsilicone, 7.0 grams of ethyltriacetoxysilane and 0.35 grams hexamethyldisiloxane were sheared with the soap to produce a grease. An additional 548 grams of water were added to the grease to produce an emulsion over a period of 5 minutes. 864 grams of this emulsion were transferred to a 3-necked flask. The emulsion was slowly stirred at room temperature for 46 hours, then was neutralized with 21 grams of triethanolamine. The emulsion contained 0.19% $D_4$ and traces of other cyclics. The emulsion was broken by adding isopropanol. The oil phase was stripped of isopropanol and cured to an elastomer when heated for 2 hours at 200°C at 40 mbar 30 mm vacuum.

The emulsion produced in this example was stable at room temperature but because the emulsifiers were not optimized, it was not stable during 50°C stability tests.

EXAMPLE 8.

Emulsion Condensation of Silanol Endblocked Linear Dimethylsilicone Methylvinyldichlorosilane, γ-Mercaptopropyltriethoxysilane and Hexamethyldisiloxane

To a Hobart Bowl were added 35 grams of a 50/50 melted blend of non-ionic surfactants 1 and 2 and 35 grams of water. This was stirred until a uniform consistency was achieved. Over a 4 minute period was added with shearing, a mixture consisting of 340.9 grams of a 100 $mm^2/s$ silanol endblocked linear dimethylsilicone, 3.48 grams of methylvinyldichlorosilane, 3.48 γ-mercaptopropyltriethoxysilane, and 0.35 grams of hexamethyldisiloxane. The reactants had a grease consistency at the end of the 5 minute period. Over a 4 minute time interval 548.8 grams of water were added with stirring to make the emulsion of reactants. To the emulsion was added 20 grams of dodecylbenzenesulfonic acid. 943.3 grams of this emulsion and catalyst were transferred to a 3-necked flask which was stirred at ambient temperature for 46 hours. 11.5 grams of triethanolamine were added to neutralize the catalyst. The emulsion had a viscosity of vapor phase chromatographic analysis showed no hexamethyldisiloxane, methylvinyldichlorosilane or γ-mercaptopropyltriethoxysilane and only traces of $D_4$ and $D_5$.

A portion of the emulsion was broken by addition of isopropanol as in previous examples. The silicone oil/resin phase had a viscosity of 113,300 $mm^2/s$ and a silanol content of 0.109%. No effort was made to optimize the above emulsion for long term stability hence it did not pass a 50° aging test.

## Claims

1. A process for manufacturing an aqueous emulsion of silicone oils and resins in which a silicone phase polymer is formed in emulsion which silicone phase polymer is defined:

$Y_{m+2}(Me_2SiO)_n(R^4SiO_{3/2})_m(R^4MeSiO)_z$

wherein:

$R^4$ = hydrogen, alkyl, alkenyl, aryl, substituted aryl, or substituted alkyl: halocarbon, amino, mercapato, ether, ester, acid, acrylate; methacrylate, epoxy, amide, hydroxyl, acetal, cyano, or sulfonylazide

Y is individually a monofunctional radical selected from

$Me_3SiO_{1/2}$.$O_{1/2}H$, and $O_{1/2}R^3$,

where $R^3$ is an alkyl group having 1 to 6 carbons, an alkaryl group having 7 to 20 carbons or an aryl group having 6 to 18 carbons;

m + 2 is in a range of 0 to 50 such that Y is less than or equal to 15 weight percent of the polymer; n has a value of at least 20 such that ($Me_2SiO$) is greater than or equal to 50 weight percent of the polymer; m is in a range of 0 to 50 such that $R^4SiO_{3/2}$ is less than or equal to 10 weight percent of the polymer; and z is in a range of 0 to 50 such that $R^4MeSiO$ is less than or equal to 45 weight percent of the polymer; which process comprises:

(a) forming in a reactor a grease by mixing silicone reactants, water and a surfactant or sufactants wherein the water content of said grease is no more than 30 percent by weight of a silicone phase formed by the silicone reactants, the total surfactant is no more than 18 percent by weight of the grease mixture, the silicone reactants are the remaining percent by weight of the total reaction mixture, and the lifetime of the grease is less than 60 minutes;

(b) diluting said grease with additional water to form an emulsion such that the emulsion contains greater then 35 percent water;

(c) adding in either step (a) or (b) above an acid form of an anionic surfactant, or a base form of a cationic surfactant which acts to form a surface active condensation catalyst wherein the amount of such surface active catalyst does not exceed 8 percent by weight of the silicone polymer formed; and additionally adding in either step (a) above or step (e) below a non-ionic surfactant or surfactants wherein such non-ionic surfactant may be present from 0 to 17 percent by weight of the silicone polymer and such that the total combined amount of surfactant, ionic and non-ionic, does not exceed 18 percent by weight of the silicone polymer formed;

(d) transferring the emulsion of step (b) from the reactor to a separate vessel where polymerization occurs; and

(e) neutralizing said catalyst in the vessel with an appropriate acid or base.

2. The process of Claim 1 in which the silicone phase polymer contains no more than 2.5 weight percent $(Me_2SiO)_4$ impurity and no more than five percent $C_xH_{2x+1}OH$, where x = 1 to 5.

3. The process of Claim 1 wherein the silicone phase polymer is polymerized from one or more silicone or silane reactants selected from the following classes:

(a) a silanol terminated dimethylsilicone, or precursors of the dimethylsilicone which form silanol when mixed, with water, which silanol terminated dimethylsilicone or precursors have a viscosity of greater than 25 centistokes but no more than 5000 and contains no more than 6 weight percent $(Me_2SiO)_x$ where x equals 4, 5 and 6 and no more than 2.5 weight percent of $(Me_2SiO)_4$ in particular and which silanol terminated dimethylsilicone or precursor represent more than 50% of the total starting silicone reactants;

(b) $Me_3SiX$ where X equals trimethylsiloxy, alkoxy, acryloxy, aryloxy or halogen;

(c) $(RO)_3SiC_rH_{2r}M$ where r equals 1 to 18 carbons in a chain which is straight or branched; where M equals hydrogen, amino, amide, polyamide, ester, polyester, ether, polyether, acrylate, polyacrylate, methacrylate, polymethacrylate, alkenyl, mercapato, disulfide, halogen, fluorocarbon, quarternary ammonium salt, acetal or sulfonylazide, and when r equals o, M also equals vinyl or aryl, where R equals hydrogen, alkyl or polyether and where "OR" may be replaced with halogen;

(d) $MeR''Si(OR)_2$ or $RO(MeR''SiO)_jR$, where R equals hydrogen, alkyl having 1 tp 20 carbons, alkenyl, ether or polyethers, and j = 2 to 50;

(e) MeHSiO cyclics or linears or $MeHSiX_2$ where X equals halogen.

4. The process of Claim 1 where n is at least 20, Y is derived from $Me_3SiOSiMe_3$, and the catalyst is the acid form of an anionic surfactant.

5. The process of Claim 1 where Y is $Me_3SiO_{1/2}$ or $O_{1/2}H$, $(Me_2SiO)_n$ constitutes more than 70 percent of the silicone polymer, and the grease exists less than 30 seconds and has a viscosity greater than 100,000 $mm^2/s$ before being diluted to an emulsion having a viscosity less than 5000 $mm^2/s$.

6. The process of Claim 3 where the $R^4SiO_{3/2}$ precursor is added after catalyst neutralization.

7. The process of Claim 3 wherein one of the starting co-reactans is $R'Si(OR)_3$ where R' is an amino alkyl having 2 to 20 carbons and 1 to 8 nitrogens.

8. The process of Claim 3 where one of the starting co-reactans is $(MeHSiO)_x$,$MeHSiX_2$ , or $Me_3SiOSiMe_3$, and an acid catalyst is used.

9. The process of Claims 1 to 8 where the grease forming stage (a) is from 0.01 seconds to 20 minutes or from 0.01 seconds to 5 minute and preferably is less than 1 minute or is less than 30 seconds.

10. The process of Claims 1 to 9 wherein the grease forming and dilution steps take place at pressures below 6.9 bar.

11. The process of Claims 1 to 10 wherein polymerization of the silicone reactants in stage (a) occurs in an vessel seperate from the reactor.

12. The process of Claims 1 to 11 where the cationic or anionic surface active catalyst is added before grease formation and the non-ionic surfactant is added at neutralization.

13. The process of Claims 1 to 11 wherein the anionic surface active agent is an alkaryl sulfonic acid or a halogenated carboxylic acid and cationic surface active agent is tetraalkylammonium hydroxide and the non-ionic surface active agent is an ethoxylated alkylphenol or ethoxylated linear alcohol.

14. The process of Claims 1 to 13 wherein a base or acid precursor of a surface active catalyst is added.

15. The process of Claim 14 wherein the acid precursor is $R^8ArSO_3R^9$ where $R^9$ is an alkyl group having 1 to 18 carbons and $R^8$ is an alkyl, aryl or alkaryl group having 6 to 18 carbon atoms, a silanol or a siloxy group.

16. The process of Claim 14 wherein the base precursor starting reactans are selected from

$R_4N^+Cl^-$ + NaOH

and

$R_3N$ + 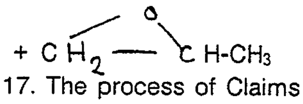

17. The process of Claims 1 to 16 wherein the neutralizing agent of Step (e) is a weak base preferably amine, alkanol amine or sodium carbonate or a weak acid preferably acetic acid.